Europäisches Patentamt

European Patent Office

Office européen des brevets

(19)

(11) Veröffentlichungsnummer : **0 393 397 B1**

(12)
# EUROPÄISCHE PATENTSCHRIFT

(45) Veröffentlichungstag der Patentschrift :
**12.08.92 Patentblatt 92/33**

(51) Int. Cl.$^5$ : **B62D 21/00**

(21) Anmeldenummer : **90105958.4**

(22) Anmeldetag : **29.03.90**

(54) **Personenkraftwagen mit einem Hinterachsträger.**

(30) Priorität : **17.04.89 DE 3912501**

(43) Veröffentlichungstag der Anmeldung :
**24.10.90 Patentblatt 90/43**

(45) Bekanntmachung des Hinweises auf die
Patenterteilung :
**12.08.92 Patentblatt 92/33**

(84) Benannte Vertragsstaaten :
**DE FR GB IT**

(56) Entgegenhaltungen :
**DE-A- 3 048 754**

(73) Patentinhaber : **DAIMLER-BENZ
AKTIENGESELLSCHAFT
Mercedesstrasse 136
W-7000 Stuttgart 60 (DE)**

(72) Erfinder : **Kleinschmit, Einhard
Esslinger Strasse 66/1
W-7300 Esslingen (DE)**
Erfinder : **Tattermusch, Peter
Kastanienweg 40
W-7300 Esslingen (DE)**
Erfinder : **König, Werner
Aprikosenstrasse 33
W-7000 Stuttgart 61 (DE)**

## Beschreibung

Die Erfindung betrifft einen Personenkraftwagen gemäß den Merkmalen des Oberbegriffes des Patentanspruch 1.

Personenkraftwagen dieser Ausgestaltung sind durch den Typ 190 der Mercedes-Benz Aktiengesellschaft seit langem bekannt. Die rückwärtige Quertraverse des Hinterachsträgers befindet sich dabei, bezogen auf die Fahrzeuglängsrichtung, vor dem unmittelbar vor der Ersatzradmulde angeordneten Karosserie-Querträger, an dem die Seitenteile des Hinterachsträgers mit ihrem rückwärtigen Enden abgestützt sind.

Der Abstand des hinteren Querträgers von der Fahrzeugrückseite ist dabei einerseits kurz genug, um eine ausreichende Querstabilität des rückwärtigen, weichen Bodenbereiches, der durch die Ersatzradmulde belastet ist, zu gewährleisten, und andererseits groß genug, um für den Fall des Heckaufpralls eine ausreichend lange Knautschzone sicherzustellen. Dennoch läßt sich nicht verhindern, daß bei stärkeren Auffahrunfällen der Querträger mit verformt wird, weshalb der Erfindung die Aufgabe zugrunde liegt, eine Lösung aufzuzeigen, die eine Verlängerung dieser Knautschzone ermöglicht und bei der dennoch eine ausreichende Queraussteifung für den knautschbaren, hinter dem Querträger liegenden Bodenbereich erhalten bleibt.

Diese Aufgabe wird erfindungsgemäß durch die kennzeichnenden Merkmale des Ansprüches 1 gelöst. Der Karosserie-Querträger ist bei dieser Lösung soweit vor der Ersatzradmulde vorgesehen, daß für letztere bzw. das Ersatzrad in Fahrtrichtung ein die Knautschzone beachtlich vergrößernder Freiweg geschaffen wird. Die in diesem Verformungsbereich liegende hintere Quertraverse des Hinterachsträgers stellt aufgrund ihres in Fahrzeuglängsrichtung biegeweichen Profiles trotz ihrer Lage zwischen Reserveradmulde und Querträger kein die Verformbarkeit des Knautschbereiches wesentlich beeinträchtigendes Element dar.

In Verbindung mit der Befestigung der rückwärtigen Enden der Seitenteile an den Karosserie-Längsträgern im Bereich hinter der Quertraverse wird über den Hinterachsträger gleichzeitig eine gewisse Queraussteifung des Heckbereiches erreicht, zumal die Quertraverse des Hinterachsträgers verhältnismäßig weit nach hinten gerückt ist. Durch diese Lage der Befestigungspunkte für die Seitenteile ist es zudem möglich, diesen eine insgesamt große Länge zu geben, so daß sich auch eine breite Abstützbasis mit geringen Belastungen der Karosserie im Bereich der jeweiligen Befestigungspunkte ergibt. Dies erweist sich auch unter Geräuschgesichtspunkten als vorteilhaft, wobei durch die rückwärtigen, karosserieseitigen Befestigungen der Seitenteile auch das Schwingungsverhalten des heckseitigen Karosseriebereiches günstig beeinflußt wird.

In der Zeichnung ist ein Ausführungsbeispiel der Erfindung dargestellt.

Es zeigen in stark schematischer Darstellung:

Fig. 1 eine Draufsicht auf das heckseitige Teil einer Bodengruppe eines Personenkraftwagens, in bekannter Ausführungsform,

Fig. 2 einen Längsschnitt durch das heckseitige Teil einer Bodengruppe eines Personenkraftwagen, zur Veranschaulichung der erfindungsgemäßen Anordnung eines Hinterachsträgers, entlang der Linie II-II der Fig. 3 und

Fig. 3 eine Draufsicht auf das Bodengruppenteil gemäß Fig. 2.

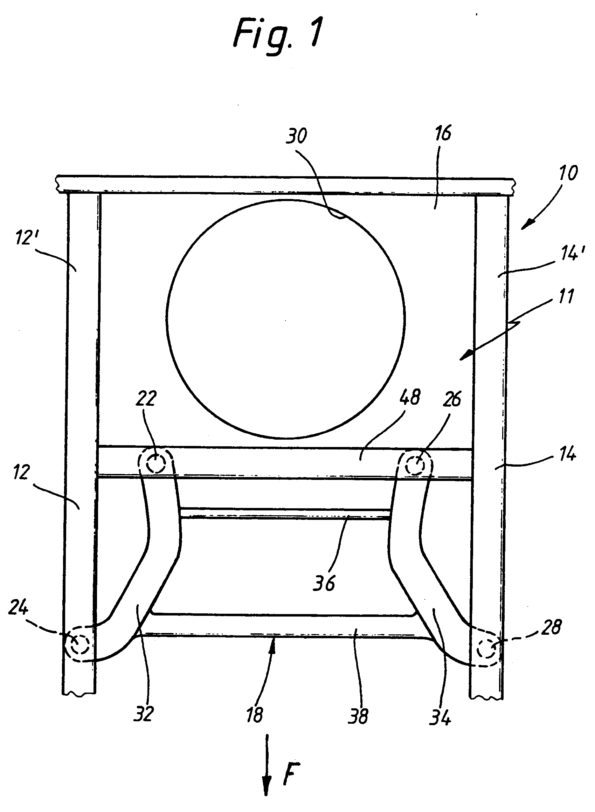

Die Darstellung gemäß Figur 1 eines als Ganzes mit 10 bezeichneten Heckteils einer Bodengruppe 11 eines an sich bekannten Personenkraftwagens soll zum besseren Verständnis der Erfindung dienen.

Die Bodengruppe 11 weist zwei diese seitlich begrenzende Längsträger 12 und 14 auf, wobei der Karosserieboden mit 16 bezeichnet ist.

Mit 18 ist als Ganzes ein Hinterachsträger einer Hinterachse bezeichnet, der mittels Abstützlagern 22, 24, 26 und 28 an der Unterseite der Karosserie elastisch abgestützt ist. Die, in Fahrtrichtung betrachtet, vorderen Abstützlager 24 und 28 sind dabei an den Längsträgern 12 und 14 befestigt, während die hinteren Abstützlager 22 und 26 an einem Karosserie-Querträger 48 befestigt sind.

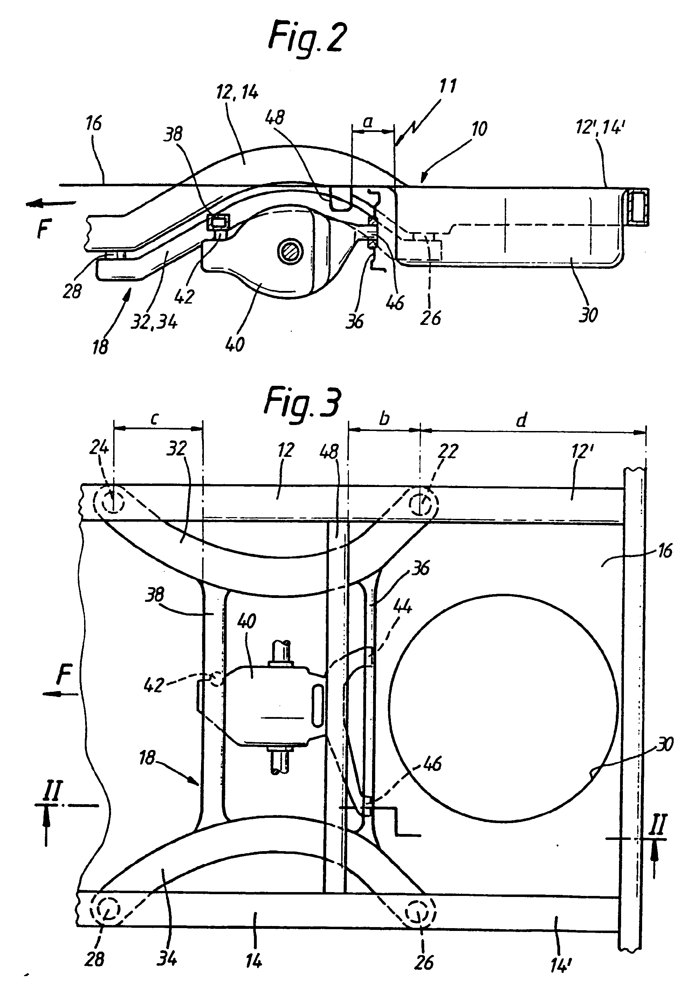

Im Bereich des Hinterachsträgers 18 verlaufen die Längsträger 12 und 14, wie bei der erfindungsgemäßen Konstruktion gemäß Figur 2 gezeigt, brückenartig gebogen, wobei sich deren heckseitigen Endstücke 12′ und 14′ in etwa wieder horizontal erstrecken.

Zwischen Karosserie-Querträger 48 und Hinterende der Bodengruppe 11 ist am Boden 16 eine Ersatzradmulde 30 vorgesehen.

Der Hinterachsträger 18 weist zwei jeweils einer Fahrzeuglängsseite zugeordnete Seitenteile 32 und 34 auf, die durch zwei im Abstand voneinander vorgesehene Quertraversen 36 und 38 miteinander verbunden sind.

Die Seitenteile 32 und 34 sind vorzugsweise in zwei Richtungen bogenförmig gekrümmt, indem sie einerseits in Fahrzeugquerrichtung nach innen und andererseits, in Seitenansicht, in etwa parallel zu den bogenförmigen Längsträgerabschnitten verlaufen (siehe Figur 2).

Im Crashfall prallt das Ersatzrad über die Ersatzradmulde 30 auf den Karosserie-Querträger 48 auf und wird diesen gegebenenfalls verformen.

Figur 2 zeigt demgegenüber die neue, erfindungsgemäße Ausführungsform. Für entsprechende Teile finden gleiche Bezugzeichen Verwendung.

Der konstruktive Unterschied zwischen beiden Ausführungsformen besteht darin, daß der steif ausgelegte, sich über den hinteren Teil des Hinterachsträgers 18 erstreckende Karosserie-Querträger 48 gemäß Figur 2 in einem relativ großen Abstand a vor der Ersatzradmulde 30 vorgesehen ist, und die Quertraverse 36 ungefähr in der Mitte dieses Abstandes a zwischen Karosserie-Querträger 48 und Ersatzradmulde 30 eingepaßt ist. Dabei ist zumindest diese Quertraverse 36 als profilierter Blechkörper ausgebildet, der zwischen den Seitenteilen 32 und 34 des Hinterachsträgers 18 derart angeordnet ist, daß er in Fahrtrichtung F biegeweich ist.

Wie Fig. 2 deutlich zeigt, sind auch die hinteren Abstützlager 22 und 26 des Hinterachsträgers 18 an der Unterseite der Längsträger 12 und 14 befestigt.

Dabei befinden sich die hinteren Abstützlager 22 und 26 in einem Abstand b vom Karosserie-Querträger 48 in Richtung auf das Fahrzeugheck, während sich die vorderen Abstützlager 24 und 28 in einem Abstand c vor der vorderen Quertraverse 38 befinden, der größer ist als der Abstand b. Der Hinterachsträger 18 zeichnet sich somit längsträgerseitig durch entsprechend große Abstützbasen aus.

Die Hinterachse ist beispielsweise über ein Achsgetriebe 40 antreibbar, das in bekannter Weise an den beiden Quertraversen 36 und 38, schwingungsmäßig abgekoppelt, abgestützt ist, indem es an der, in Fahrtrichtung F gesehen, vorderen Quertraverse 38 bei 42 einfach und an der hinteren Quertraverse 36 bei 44 und 46 zweifach entsprechend aufgenommen ist.

Im Falle eines heckseitigen Aufpralls kann sich somit die Bodengruppe 11 in etwa um eine durch den Abstand a definierte Strecke in Fahrtrichtung F zusätzlich verformen. Die hintere Quertraverse 36 mit ihrer Biegeweichheit in Fahrtrichtung F sowie die elastische Abstützung des Achsgetriebes 40 an der Quertraverse 38 setzen diesem, die hintere Knautschzone des Fahrzeuges vergrößernden Verformungsweg keinen nennenswerten Widerstand entgegen, wobei insbesondere vermieden ist, daß durch das im Crashfall über die Wandung der Ersatzradmulde auf die Quertraverse 36 einwirkende Ersatzrad zugleich eine Deformation des Karosserie-Querträgers erfolgt.

Neben dem erreichten, zusätzlichen Freiweg entsprechend dem Abstand a für das Ersatzrad ermöglicht die Plazierung des Karosserie-Querträgers 36 den Hinterachsträger 18 in Fahrzeugquerrichtung dort auszusteifen, wo dieser unter dem Einfluß von seitlich wirkenden Verformungskräften besonders gefährdet ist.

Darüber hinaus ist der Abstand d der hinteren Abstützlager 22 und 26 der Seitenteile 32 und 34 vom Fahrzeugheck wesentlich geringer als derjenige des Karosserie-Querträgers 48 zum Fahrzeugheck.

Die Seitenteile 32 und 34 tragen somit zu einer wesentlich größeren Querversteifung des Fahrzeugheckbereiches bei, wodurch in diesem angeregte Schwingungen entsprechend gedämpft und ein dementsprechend geräuschärmerer Fahrkomfort erzielt wird.

## Patentansprüche

1. Personenkraftwagen mit in seinem Bodenbereich (16) angeordneten längsseitigen Längsträgern (12, 14), einer im Heckbereich bodenseitig angeordneten Reserveradmulde (30), einem bezogen auf die Fahrtrichtung (7) vor dieser liegenden, zwischen den Längsträgern (12, 14) verlaufenden Querträger (48) sowie mit einem Hinterachsträger (18), der zwei in Fahrzeuglängsrichtung verlaufende Seitenteile (32, 34) aufweist, die in ihren Endbereichen gegenüber der Karosserie befestigbar sind und die untereinander durch zwei Quertraversen (36, 38) verbunden sind, die im Abstand zueinander und zu den karosserieseitigen Befestigungen (22, 24, 26, 28) der Seitenteile (32, 34) liegen und von denen die bezogen auf die Fahrzeuglängsrichtung (7) rückwärtige Quertraverse (36) in Fahrzeuglängsrichtung biegeweich ist und dem Querträger (48) benachbart liegt, **dadurch gekennzeichnet,** daß die rückwärtige Quertraverse (36) des Hinterachsträgers (18) mit Abstand zwischen Karosserie-Querträger (48) und Ersatzradmulde (30) angeordnet ist und daß die Seitenteile (32, 34) des Hinterachsträgers (18) mit ihrem rückwärtigen Ende an jeweils einem Karosserielängsträger (12 bzw. 14) abgestützt sind.

2. Personenkraftwagen nach Anspruch 1, **dadurch gekennzeichnet,** daß die Seitenteile (32, 34) des Hinterachsträgers (18) über dessen in Fahrtrichtung vorne liegende Quertraverse (38) weiter überstehen als über dessen hinten liegende Quertraverse (36).

## Claims

1. Passenger vehicle having longitudinal members (12, 14) arranged in its floor region (16) at the longitu-

EP 0 393 397 B1

dinal sides, a spare wheel pan (30) arranged in the floor in the rear region, a cross-member (48) situated in front of the latter in relation to the direction of travel (7) and running between the longitudinal members (12, 14), and having a rear axle support (18) which has two side pieces (32, 34) which run in the longitudinal direction of the vehicle, can be secured relative to the body in their end regions and are connected to one another by two transverse tie bars (36, 38) which are situated at a distance from one another and from the fixing points (22, 24, 26, 28), on the body, of the side pieces (32, 34) and of which the rearward transverse tie bar (36) in relation to the longitudinal direction (F) of the vehicle is flexible in the longitudinal direction of the vehicle and is situated adjacent to the cross-member (48),

**characterized in that**

the rearward transverse tie bar (36) of the rear axle support (18) is arranged, with clearance, between body cross-member (48) and spare wheel pan (30) and in that the side pieces (32, 34) of the rear axle support (18) are supported by their rearward end on in each case one longitudinal member (12 and 14 respectively) of the body.

2. Passenger vehicle according to Claim 1,

**characterized in that**

the side pieces (32, 34) of the rear axle support (18) extend further beyond that transverse tie bar (38) of said support which is situated to the fore in the direction of travel than beyond that transverse tie bar (36) of said support which is situated at the rear.

## Revendications

1. Voiture particulière présentant des longerons latéraux (12,14) disposés dans sa région de plancher (16), une auge de roue de secours (30) disposée côté plancher dans la partie arrière du véhicule, une traverse (48) s'étendant entre les longerons (12,14) et située, dans la direction de marche (F), avant l'auge (30), et un support d'essieu arrière (18), qui présente deux parties latérales (32,34) s'étendant dans la direction longitudinale du véhicule, qui peuvent être fiées en vis-à-vis à la carrosserie dans leurs régions terminales et qui sont mutuellement assemblées par deux éléments transversaux (36,38) qui se trouvent à distance l'un de l'autre et des fixations (22,24,25,28) côté carrosserie des parties latérales ( 32,34 ), l'élément transversal ( 36 ) arrière dans la direction de marche (F) étant flexible dans la direction longitudinale du véhicule et voisin de la traverse (48),

**cactérisée en ce que**

l'élément transversal arrière (36) du support d'essieu arrière (18) est disposé à distance entre la traverse de carrosserie (48) et l'auge de roue de secours (30), et en ce que les parties latérales (32,34) du support d'essieu arrière (18) s'appuient, par leur extrémité arrière, contre un longeron de carrosserie respectif (12 ou 14).

2. Voiture particulière selon la revendication 1,

**caractérisée en ce que**

les parties latérales (32,34) du support d'essieu arrière (18) s'étendent plus loin au-delà de son élément transversal (38) situé en avant dans la direction de marche que de son élément transversal (36) situé en arrière.

# Fig. 1

# Fig. 2

# Fig. 3